# FASCICULE DE BREVET EUROPEEN

(11) **EP 0 303 240 B1**
(45) Date de publication et mention de la délivrance du brevet: **23.03.1994**
(21) Numéro de dépôt: 88112972.0
(22) Date de dépôt: 10.08.1988
(51) Int. Cl.: B23H 1/10, B01D 35/12, B23Q 11/10

(54) **Installation et procédé pour filtrer un liquide d'usinage dans un circuit d'alimentation en continu**
Anlage und Verfahren, um in einem ununterbrochenen Versorgungskreis eine Bearbeitungsflüssigkeit zu filtern
Installation and method to filter a machining fluid in an uninterrupted supplying circuit

(30) Priorité: 13.08.1987 CH 3140/87
(43) Date de publication de la demande: 15.02.1989
(73) Titulaire: CHARMILLES TECHNOLOGIES S.A., 1217 Meyrin 1 (CH)
(72) Inventeur: Corcelle, François, F-01710 Thoiry (FR); Moussli, Omar, CH-1213 Petit-Lancy (FR)
(74) Mandataire: Hugelin, Christiane

(56) Documents cités:
- FR-A- 1 435 241
- US-A- 4 033 870
- PATENT ABSTRACTS OF JAPAN, vol. 7, no. 1 (M-183)[1146], 6 janvier 1983, page 144 M 183; JP-A-57 163 028 (MITSUBISHI DENKI K.K.) 07-10-1982

## Description

L'invention a trait à une installation et à un procédé pour filtrer et recycler un liquide d'usinage dans un circuit d'alimentation en continu.
Le liquide d'usinage d'une machine d'usinage ,en particulier par décharges électriques érosives, désignée par la suite sous le terme "machine EDM", est pollué progressivement en cours d'usinage par les résidus de cet usinage, dans le cas d'une machine EDM, il sagit des particules métalliques dues à l'érosion des électrodes, ce qui affecte sa conductivité. Afin de maintenir cette pollution dans des limites acceptables, il est connu en EDM de recycler de façon continue le liquide d'usinage en transvasant le liquide usé du bac d'usinage dans une cuve où il décante, puis en le filtrant et en l'injectant à nouveau, soit dans le bac, soit directement dans la zone d'usinage, soit encore dans certaines zones critiques, par exemple à proximité des guides supportant le fil ou des contacts d'amenée du courant. Le liquide d'usinage est en général un liquide diélectrique.

Les filtres communément utilisés sont, dans la plupart des cas, des dispositifs agencés pour ne laisser circuler le liquide que dans un seul sens; on les jette une fois qu'ils sont bouchés, contrairement aux autres types de filtres qu'on purge en inversant le sens de circulation du fluide. Ils sont réalisés en papier ou en matière synthétique. On peut prévoir dans ces filtres un système de récupération des particules décantées. Ces filtres se colmatent au bout d'un certain temps. Or, ce colmatage progressif abaisse tellement le débit du liquide filtré que son injection risque de ne plus être assurée correctement dans la zone de travail, ce qui nécessiterait une interruption de l'usinage. Ces filtres doivent alors être remplacés, ce qui exige l'intervention d'un opérateur. Plus la vitesse de l'usinage est élevée, plus ce colmatage est rapide. Pour augmenter l'autonomie de la machine à éroder (en lui permettant, par exemple, de fonctionner durant tout un week-end), il y a donc intérêt à prolonger au maximum la durée de vie utile des filtres.

L'invention a pour objet l'augmentation de la durée de vie utile des filtres à flux de circulation à sens unique tels que ceux utilisés sur les machines EDM tant à découpage par fil que par enfonçage. Elle est définie comme il est dit aux revendications 1 et 9.

De façon inattendue, les tests effectués par la déposante ont en effet montré que cette durée de vie est notablement allongée en effectuant des arrêts successifs de la circulation de liquide à travers les filtres, ces périodes de repos permettant vraisemblablement leur auto-régénération. Lors de chacune de ses remises en service après ces arrêts de fonctionnement, la perte de charge à travers le filtre est inférieure à sa valeur au moment de l'arrêt : le filtre semble s'être décolmaté de lui-même. Cet effet remarquable peut encore être augmenté pour un filtre en papier, qui est donc de nature spongieuse, en donnant à la face amont du filtre une constitution qui limite l'adhésion ou l'incrustation de particules, par exemple en imprégnant cette face avec un polymère. Lorsque cette perte de charge atteint à nouveau un niveau critique on peut, selon les cas, soit interrompre le fonctionnement du filtre, soit le mettre définitivement hors service. La durée de vie utile obtenue ainsi est supérieure à celle d'un filtre fonctionnant en continu.

L'installation et la méthode d'alimentation et de régénération du liquide d'usinage de la présente invention permettent d'effectuer des arrêts successifs du fonctionnement des filtres sans devoir interrompre l'usinage.

La présente invention peut présenter de nombreuses variantes ou formes d'exécution. Elle sera maintenant illustrée plus en détail par la description, à titre d'exemple, de deux de ses modes de réalisation seulement, schématisés par le dessin annexé dans lequel
- la figure 1 illustre schématiquement une première variante de l'invention, réalisée sur une machine EDM,
- la figure 2 est un diagramme de la chute de pression dans un filtre en fonction du temps, et
- la figure 3 illustre schématiquement un second mode de réalisation de l'invention.

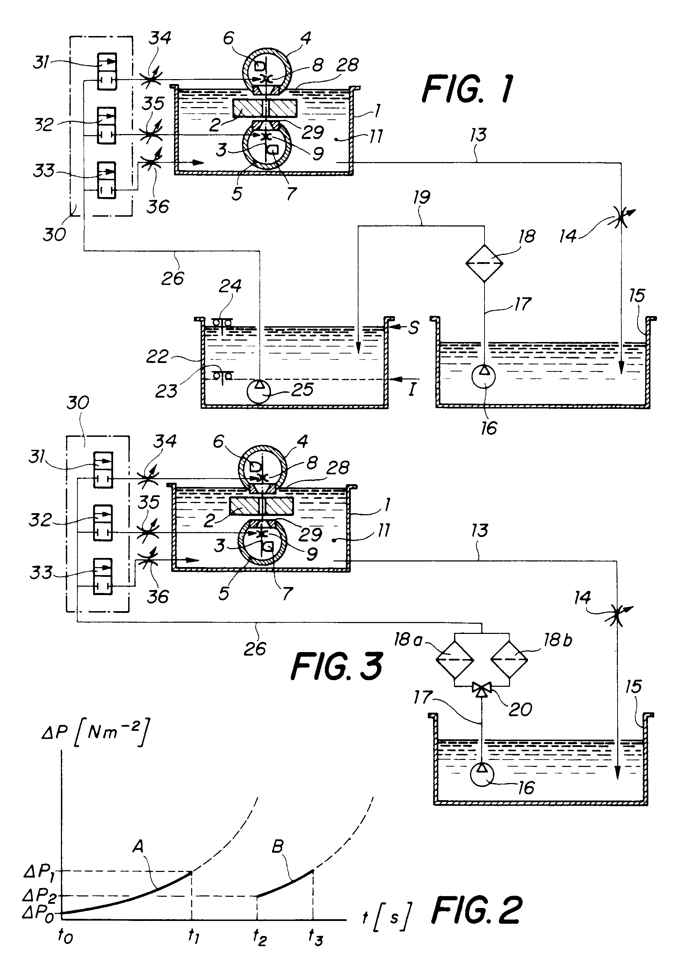

L'installation représentée à la figure 1 fait appel à une unité de filtration de débit supérieur à la consommation moyenne en liquide d'usinage de la machine EDM. Ceci permet de réaliser une réserve de liquide filtré, propre à être réutilisée, dans un réservoir-tampon situé en aval de cette unité de filtration. C'est cette réserve qui alimentera la zone d'usinage lors des arrêts intermittents de la filtration. Le chiffre de référence 1 désigne le bac d'usinage d'une machine EDM servant à découper par électroérosion une pièce 2 au moyen d'un fil-électrode 3. Pour plus de clarté, la plus grande partie de la machine EDM a été omise au dessin, et les coupes schématiques 4 et 5 des têtes d'usinage supérieure et inférieure ne sont pas à l'échelle, mais fortement agrandies. Chaque tête contient un contact 6, 7 d'amenée de courant au fil, un guide-fil 8, 9 et une buse 28, 29. Lors de l'usinage de la pièce 2, le liquide diélectrique 11 est peu à peu pollué par les particules érodées et les produits de sa propre décomposition. Le maintien à un niveau acceptable de la pollution et de la conductivité du liquide d'usinage, est réalisé en circuit fermé. Le liquide usagé est vidangé hors du bac 1 par une conduite 13 qui le mène, à travers un dispositif 14 de réglage du débit, vers une cuve 15. Une pompe 16 placée dans cette cuve envoie le liquide sale par une conduite 17 à travers un filtre 18, à la sortie duquel est branchée une conduite 19 qui amène ensuite le liquide dans un réservoir-tampon 22.
La pompe 16 et le filtre 18, ainsi que les conduites 17 et 19, sont dimensionnés de manière à obtenir à travers le filtre, même lorsque celui-ci est partiellement colmaté, un débit largement supérieur à ce qui est nécessaire pour alimenter en régime continu le bac 1 et les divers circuits d'injection des têtes d'usinage 4, 5, avec du liquide régénéré. Il est donc possible d'interrompre de temps en temps le fonctionnement de la pompe 16, et donc du filtre 18, sans cesser d'alimenter le bac en liquide filtré, à condition de disposer d'une réserve de liquide suffisante dans le réservoir-tampon 22 placé en aval du filtre 18. Cette réserve est constituée par le volume compris entre deux niveaux I et S du réservoir 22, déterminés par deux indicateurs de niveau 23 et 24. Ces indicateurs peuvent être par exemple des flotteurs mobiles, en particulier en liège, actionnant chacun un interrupteur.Une pompe 25 située au-dessous du niveau I est reliée par une conduite 26 à une unité de distribution 30 comprenant trois distributeurs de liquide 31, 32, 33 qui injectent le liquide filtré à travers trois régleurs de débit 34, 35, 36, en divers emplacements à l'intérieur du bac et vers les têtes d'usinage. Dans le dessin, les distributeurs 31 et 32 alimentent les têtes d'usinage 4 et 5 et les buses d'injection 28 et 29, tandis que le distributeur 33 injecte du liquide directement dans le bac 1. D'autres configurations sont possibles, par exemple une alimentation afin de lubrifier les contacts 6 et 7, une injection spéciale pour faciliter le réenfilage du fil, etc...
De même, le réservoir tampon 22 peut comporter en fait deux compartiments, l'un pour le liquide filtré et l'autre pour le liquide sale, ce dernier compartiment communiquant avec la cuve 15 par une conduite semi-rigide, par exemple. Le trop-plein de liquide filtré peut alors se déverser dans le compartiment de liquide non filtré.

Des organes de commande électroniques (non représentés au dessin) commandent la circulation du liquide selon le principe suivant : lorsque l'indicateur de niveau inférieur 23 indique que le niveau du liquide dans le réservoir 22 tombe au-dessous du niveau I, la pompe 16 est mise en marche. Comme le débit de cette pompe est supérieur à la consommation de liquide de la machine à éroder, le niveau dans le réservoir 22 monte jusqu'à ce qu'il atteigne la cote S, ce qui active l'indicateur de niveau supérieur 24. Un signal émis par celui-ci provoque l'arrêt de la pompe 16 et à partir de ce moment l'irrigation de la zone d'usinage est alimentée par la réserve de liquide accumulée entre les niveaux S et I du réservoir-tampon 22. Le niveau dans celui-ci baisse donc jusqu'à la cote I, ce qui active l'indicateur inférieur 23, qui remet la pompe 16 en marche, et le cycle recommence.

Le filtre 18 fonctionnera donc par intermittence suivant des cycles déterminés par le volume de liquide entre les cotes I et S, la capacité du filtre, en fonction de son engorgement, la consommation de la machine, la vitesse de l'usinage, etc... La pompe 16 est aussi mise en marche pendant un certain laps de temps à chaque vidange du bac, dès la détection de l'ouverture de la trappe de vidange et indépendamment de l'information des flotteurs 23 et 24. Passé ce délai, par exemple quinze minutes, la commande de la pompe est reprise par les indicateurs 23 et 24, et ce jusqu'au prochain usinage. Le remplissage du bac se fait grâce à une autre pompe, située dans la cuve 15, non illustrée au dessin. La perte de charge à travers le filtre 18 peut être mesurée grâce à une manomètre différentiel, non illustré au dessin, disposé à l'entrée du filtre 18. Cette mesure permet de renseigner l'utilisateur sur le nombre d'heures encore disponibles avant le colmatage complet, grâce à des courbes d'étalonnage appropriées par exemple.

Le graphique de la figure 2 montre les variations de la perte de charge ΔP d'amont en aval du filtre, en fonction du temps t. Si un filtre, mis en service au temps tₒ, présente à ce moment une perte de charge ΔPₒ, non seulement celle-ci ira en augmentant avec le temps mais sa dérivée, c'est-à-dire la variation de la perte de charge par unité de temps, augmente pendant le fonctionnement. Autrement dit, plus le filtre est encrassé, plus il s'encrasse rapidement. Ceci est indiqué par la courbe A, dont la pente augmente progressivement au cours du temps. La perte de charge du filtre en fonctionnement continu est indiquée par la partie en trait plein de cette courbe et par sa prolongation en traits interrompus qui atteint rapidement des valeurs de ΔP inadmissibles en pratique. Si on arrête le fonctionnement du filtre à l'instant t₁ (où sa perte de charge est égale à ΔP₁) pour le reprendre jusqu'à l'instant t₂, la perte de charge ΔP₂ mesurée alors est sensiblement inférieure à ΔP₁. Il importe de remarquer que l'augmentation de la perte de charge par unité de temps est également moindre qu'au moment de l'arrêt, ce qui procure un gain additionnel. Ensuite, la perte de charge et sa dérivée augmentent à nouveau comme l'indique la courbe B et sa prolongation en traits interrompus. La commande de l'installation peut être agencée pour arrêter à nouveau le fonctionnement du filtre à un instant t₃, par exemple lorsque la perte de charge atteint de nouveau la valeur ΔP₁, ou encore lorsque sa dérivée atteint un autre seuil prédéterminé. Le cycle peut être répété jusqu'à ce que le gain obtenu par repos du filtre devienne trop faible.

Evidemment, le programme commandant la circulation de liquide peut être plus complexe et comporter des routines particulières pour le remplissage initial de la cuve, des délais variables pour tenir compte de l'inertie du système, des routines mettant à profit ces délais pour avertir l'opérateur de l'imminence de certaines conditions critiques et pour arrêter automatiquement l'usinage lorsqu'une irrigation adéquate ne peut plus être assurée, etc... Toutes ces possibilités sont bien connues de l'homme du métier et ne seront donc pas décrites ici plus en détail, sauf la surveillance du degré de colmatage du filtre.

De même, les schémas de principe du dessin ne montrent pas certains éléments essentiels, mais connus, du système d'alimentation en circuit fermé, tel par exemple le déminéraliseur par échange d'ions, disposé de préférence de façon à déminéraliser le liquide filtré du réservoir 22, ainsi que la sonde de température et le serpentin d'échange de chaleur destinés au refroidissement.

Dans l'installation de la figure 1, il y a lieu de surveiller le colmatage du filtre 18, car il tend à diminuer progressivement le débit de la pompe 16, débit qui normalement doit être largement supérieur à celui de la pompe 25. Mais au fur et à mesure que le filtre 18 se colmate, le débit de la pompe 16 diminue et tend à se rapprocher de celui de la pompe 25, de sorte que le remplissage du réservoir 22 prend toujours plus de temps. Pour éviter que les débits s'égalisent ou même s'inversent alors que la machine se trouve sans surveillance humaine, il suffit de mesurer le temps qui s'écoule dans la phase de montée du liquide du réservoir 22 pour aller du niveau I au niveau S à l'aide des signaux électriques émis par les indicateurs 23 et 24, puis, à chaque cycle, de comparer ce temps avec une valeur maximum admissible telle que, en cas de dépassement, un signal d'alarme avertit l'opérateur que le filtre est à changer, par exemple dans un délai maximum de 12 heures. Tout ceci se réalise sans difficulté pour l'homme du métier à l'aide de circuits logiques câblés ou d'un microprocesseur, et présente l'avantage de supprimer le manomètre différentiel qui était destiné à surveiller la perte de charge ΔP d'amont en aval du filtre 18. Un dispositif de sécurité peut être prévu, qui interrompt l'usinage lorsque l'opérateur n'a pas changé le ou les filtres dans le délai imparti.

La figure 3 représente une seconde forme d'exécution de l'invention. Dans cette figure, les éléments analogues à ceux de la figure 1 portent les mêmes chiffres de référence que dans cette dernière et ne seront pas décrits ici à nouveau. La différence essentielle entre cette forme d'exécution et la précédente est qu'ici le filtre unique 18 de la figure 1 est remplacé par deux filtres 18a et 18b, et que le réservoir-tampon 22 est supprimé, ainsi que ses accessoires. De plus, une vanne 20 commandée (de façon non montrée au dessin) par un circuit de commande électronique, en général programmé, interrompt pendant des intervalles de temps déterminés le flux de liquide vers l'un, puis vers l'autre des filtres 18a, 18b.

Ceci permet à chacun des deux filtres d'avoir des temps de repos pendant lesquels il se régénère pendant que l'autre assure l'alimentation de la machine à éroder en liquide filtré. Evidemment, le procédé le plus simple consiste à faire fonctionner alternativement l'un ou l'autre des filtres, mais il peut y avoir avantage à les faire parfois fonctionner simultanément. Ici, comme partout ailleurs dans le texte, l'expression "un filtre" peut représenter aussi bien un filtre unique qu'une batterie de plusieurs filtres travaillant simultanément tels qu'on les utilise souvent dans le métier.

Finalement, il peut être avantageux pour des raisons pratiques de combiner les deux réalisations décrites ici, c'est-à-dire de prévoir à la foix deux filtres fonctionnant alternativement ou semi-alternativement, et un réservoir-tampon en aval de ces filtres. Ceci donne plus de liberté à l'opérateur pour le remplacement des filtres définitivement colmatés sans interruption de l'usinage, ainsi que lors de la vidange et du remplissage du bac 1.

Ajoutons que la présence d'un réservoir-tampon permet de maintenir constante la pression d'injection du fluide d'usinage dans les buses des têtes d'usinage, car elle ne varie plus en fonction de l'état des filtres, et d'augmenter aussi la stabilité de l'usinage en diminuant en particulier le risque de rupture du fil-électrode lorsque l'installation selon la présente invention est montée sur une machine EDM à fil.

L'installation décrite ici peut évidemment comporter des dispositifs de type connu, tels des organes permettant de mesurer et de réguler ou faire varier la conductivité du liquide d'usinage, de modifier ou contrôler sa température, de le faire circuler à travers des résines échangeuses d'ions, etc...

## Revendications

1. Installation d'alimentation en liquide d'usinage permettant de le recycler et d'alimenter une machine en continu, présentant
- des moyens (13, 14) pour vidanger le liquide usagé hors du bac d'usinage (1) de cette machine et l'amener dans une cuve (15) pour liquide sale,
- des organes (16, 17) pour pomper du liquide sale hors de cette cuve (15) et le faire circuler dans un seul sens à travers au moins une unité de filtration (18, 18a),
- une conduite (26) pour canaliser le liquide propre à la sortie de cette unité de filtration (18, 18a) et le ramener dans les dispositifs d'injection (31, 32, 33) situés dans la zone d'usinage, caractérisée par le fait que l'unité de filtration (18, 18a, 18b) ne comporte que des filtres jetables et par un dispositif agencé pour faire fonctionner par intermittence cette unité de filtration afin de provoquer une certaine auto-régénérations, comportant des organes (16, 20) destinés à régler sa mise en route et son arrêt et reliés à des moyens (23,24) destinés à surveiller le degré de colmatage de ces filtres jetables, ainsi que des moyens (22, 18b) pour continuer à alimenter en liquide propre la canalisation (26) lors des périodes de repos de cette unité de filtration.

2. Installation selon la revendication 1, dans laquelle les moyens pour continuer à alimenter en liquide propre la canalisation (26) lors des périodes de repos sont un réservoir-tampon (22) situé en aval de cette unité de filtration, cette dernière ayant un débit supérieur à la consommation moyenne de la machine.

3. Installation selon la revendication 1, caractérisée par plusieurs unités de filtration (18a, 18b) disposées en parallèle.

4. Installation selon la revendication 2, dans laquelle les moyens destinés à surveiller le degré de colmatage de l'unité de filtration et reliés aux organes destinés à régler sa mise en route et son arrêt sont des indicateurs de niveau (23,24) placés dans le réservoir-tampon (22), agencés pour mettre en route la pompe (16) alimentant l'unité de filtration (18) ou pour l'arrêter.

5. Installation selon la revendication 2, dans laquelle les moyens destinés à surveiller le degré de colmatage de l'unité de filtration et reliés aux organes destinés à régler sa mise en route et son arrêt sont un dispositif agencé pour mesurer le temps de remplissage du réservoir-tampon (22) et le comparer avec une valeur de référence.

6. Installation selon la revendication 5, comportant aussi un organe agencé pour émettre un signal d'alarme en cas de dépassement de cette valeur.

7. Installation selon la revendication 1, caractérisée par une unité de filtration comportant un dispositif permettant de récupérer les particules qui se sont décantées et déposées dans le fond.

8. Procédé pour alimenter de façon continue une machine d'usinage par électroérosion en liquide d'usinage filtre, caractérisé en ce que cette alimentation est assurée par le fonctionnement intermittent d'au moins une unité de filtration (18, 18a) comportant au moins un filtre jetable à flux de circulation à sens unique, afin de provoquer une certaine auto-régénérations de ce dernier.

9. Procédé selon la revendication 8, caractérisé en ce qu'on utilise de manière intermittente au moins une unité de filtration (18) de débit supérieur à la consommation moyenne de la machine EDM, celle-ci étant alimentée lors de l'arrêt de cette unité par un réservoir-tampon (22) situé en aval de l'unité.

10. Procédé selon la revendication 8, caractérisé en ce qu'on utilise plusieurs unités de filtrations (18a, 18b) disposées en parallèle, et qu'on interrompt alternativement, et par intermittence, le flux de liquide à travers ces unités de filtration.

## Claims

1. Installation for the supply of machining liquid enabling it to be continuously recycled and supplied to a machine, comprising
- means (13, 14) for drawing off the used liquid from the work tank (1) of said machine and leading it to a tank (15) for durty liquid,
- devices (16,17) for pumping durty liquid out of said tank (15) and circulating it in only one way through at least one filtration unit (18,18a),
- a pipe (26) for canalizing the clean liquid at the output of said filtration unit (18,18a) and bringing it back in the injection devices (31, 32, 33) located in the machining zone, caracterized by the fact that the filtration unit (18,18a) presents only disposable filters and by a device arranged for operating intermittently said filtration unit in order to induce a certain autoregeneration, comprising devices (16, 20) for controlling its starting and stopping, connected to means (23, 24) fitted to control the degree of clogging of these disposable filters, such as means (22, 18b) for keeping on with supplying clean liquid to the pipe (26) during the rest periods of said filtration unit.

2. Installation according to claim 1, in which the means for keeping on with supplying clean liquid to the pipe (26) during the rest periods are a buffer reservoir (22) located downstream of said filtration unit, the latter having a flow rate greater than the average consumption of the machine.

3. Installation according to claim 1, characterized by several filtration units (18a, 18b) arranged in parallel.

4. Installation according to claim 2, in which the means fitted to control the degree of clogging of the filtration unit and connected to the devices for controlling its starting and stopping are level indicators (23, 24) mounted in the buffer reservoir (22) and arranged for starting the pump (16) feeding the filtration unit (18) or stopping it.

5. Installation according to claim 2, in which the means fitted to control the degree of clogging of the filtration unit and connected to the devices for controlling its starting and stopping are a device fitted to measure the time the buffer reservoir takes to fill and compare it with a reference value.

6. Installation according to claim 5, comprising also a component arranged to emit a warning signal if this value is exceeded.

7. Installation according to claim 1, characterized by a filtration unit provided with a device allowing to recover the particles which have poured off and settled at the bottom.

8. Process for continuously supplying an electrical discharge machining machine with filtered machining liquid, characterized by this supply being provided by the intermittent operation of at least one filtration unit (18, 18a) having at least one disposable, one-way flow filter, in order to induce a certain autoregeneration of said filter.

9. Process according to claim 8, characterized by the intermittent use of at least one filtration unit (18) having a flow rate greater than the average consumption of the EDM machine, this machine being supplied, during the periods when this unit is not operating, from a buffer reservoir located downstream said unit.

10. Process according to claim 8, characterized by the use of several filtration units (18a, 18b) mounted in parallel, and by the alternate and intermittent stopping of the flow of liquid through these filtration units.

## Patentansprüche

1. Vorrichtung zur Arbeitsflüssigkeitszufuhr, die diese Flüssigkeit regeneriert und eine Maschine fortlaufend damit versogt und die
- Mittel (13,14) zur Abfuhr der verschmutzten Flüssigkeit aus dem Arbeitsbehälter (1) dieser Maschine und zu deren Zuleitung in einer Wanne (15) für schmutzige Flüssigkeit ,
- Pumpanlage zur Aussaugen der verschmutzten Flüssigkeit ausserhalb dieser Wanne (15) und zu ihrer nur in einer Richtung, durch mindestens eine Filteranlage (18,18a) in Umlauf Setzen,
- eine Leitung (26) zur Kanalisierung der sauberen, aus dieser Filteranlage (18,18a) austretenden Flüssigkeit und seiner Rückführung in Spritzeinrichtungen (31, 32, 33), die in den Arbeitsbereich gelegen sind, aufweist, gekennzeichnet dadurch, dass die Filteranlage (18, 18a, 18b) nur Werffilter aufweist und dass diese Vorrichtung, um eine gewisse Selbstregenerierung zu bewirken, mit einer, diese Filteranlage periodisch in Betrieb setzenden Einrichtung versehen ist, die an Ueberwachungsmitteln (23, 24) des Verstopfungsgrades der Werffiltern angeschaltete Regelanlagen (16, 20), für diese Filteranlage in und ausser Betrieb zu setzen, enthält, ebenso wie Versorgungsmitteln (22, 18b) zur fortsetzenden Versorgung der Leitung (26) mit sauberer Flüssigkeit , während die Ruhedauer dieser Filteranlage.

2. Vorrichtung gemäss Anspruch 1, in welcher die Versorgungsmitteln zur fortsetzenden Versorgung der Leitung (26) mit sauberer Flüssigkeit, während die Ruhedauern, ein stromabwärts dieser Filteranlage gelegener Pufferbehälter (22) ist, wobei diese Filteranlage einen grösseren Absatz hat als der mittleren Verbrauch der Maschine.

3. Vorrichtung gemäss Anspruch 1, gekennzeichnet durch mehrere, in parallel angeordnete Filteranlagen.

4. Vorrichtung gemäss Anspruch 2, in welcher die Ueberwachungsmittel des Verstopfungsgrades der Filteranlage, die an die Regelanlagen die diese Filteranlage in und ausser Betrieb setzen, angeschaltet sind, im Pufferbehälter (22) montierte Niveauanzeiger (23, 24) sind, die zum in und ausser Betrieb Setzen der die Filteranlageversorgenden Pumpe (16) eingerichtet sind.

5. Vorrichtung gemäss Anspruch 2, in welcher die Ueberwachungsmittel des Verstopfungsgrades der Filteranlage, die an die Regelanlagen die diese Filteranlage in und ausser Betrieb setzen, angeschaltet sind, eine Einrichtung zum Messen der Füllungsdauer des Pufferbehälters (22) und zum deren Vergleich mit einem Beziehungswert, ist.

6. Vorrichtung gemäss Anspruch 5, die auch eine Anlage zum Ausgeben eines Alarmsignals falls dieser Wert überschreitet wird, enthält.

7. Vorrichtung gemäss Anspruch 1, gekennzeichnet durch eine Filteranlage, die eine Einrichtung aufweist, die es erlaubt die dekantierenden Teilchen zu sammeln, die einen Bodensatz bilden.

8. Verfahren zur fortzenzende Versorgung einer Elektroerosionsmaschine mit einer gefilterten Arbeitsflüssigkeit, dadurch gekennzeichnet dass diese Versorgung durch mindestens eine, periodisch in Betrieb gesetzte Filteranlage (18, 18a) gefertigt wird, die mindestens einen Werffilter mit einem nur in einer Richtung leitbaren Umlauffluss aufweist, um eine gewisse Selbstregenerierung zu bewirken.

9. Verfahren gemäss Anspruch 8, dadurch gekennzeichnet dass eine periodisch in Betrieb gesetzte Filteranlage (18) verwendet wird, die einen grösseren Absatz hat als der mittleren Verbrauch der EDM Maschine, wobei diese Maschine, während die Ruhedauer dieser Anlage durch einen, stromabwärts dieser Filteranlage gelegenen Pufferbehälter (22) versorgt ist.

10. Verfahren gemäss Anspruch 8, dadurch gekennzeichnet dass mehrere, in parallel angeordnete Filteranlagen (18a, 18b) verwendet werden und dass der Flüssigkeitsfluss durch diese Filteranlagen wechselweise und periodisch untergebrochen wird.
